# EUROPEAN PATENT SPECIFICATION

(11) **EP 3 241 128 B1**
(45) Date of publication and mention of the grant of the patent: **05.02.2020**
(21) Application number: 15875169.3
(22) Date of filing: 24.12.2015
(51) Int. Cl.: G06F 16/242, G06F 16/2453

(54) **METHOD AND QUERY SUGGESTION SERVER FOR PROVIDING ALTERNATE QUERY SUGGESTIONS FOR TIME BOUND RESULTS**
VERFAHREN UND ABFRAGEVORSCHLAGSSERVER ZUR BEREITSTELLUNG VON ALTERNATIVEN ABFRAGEVORSCHLÄGEN FÜR ZEITGEBUNDENE ERGEBNISSE
PROCÉDÉ ET SERVEUR DE SUGGESTION D'INTERROGATION POUR FOURNIR DES SUGGESTIONS D'INTERROGATION ALTERNATIVES POUR DES RÉSULTATS DE LIMITE DE TEMPS

(30) Priority: 02.01.2015 IN 17CH2015
(43) Date of publication of application: 08.11.2017
(73) Proprietor: Huawei Technologies Co. Ltd., Shenzhen, Guangdong 518129 (CN)
(72) Inventor: GUPTA, Puneet, Shenzhen, Guangdong 518129 (CN); KAMMATH, V Vimal Das, Shenzhen, Guangdong 518129 (CN)
(74) Representative: Thun, Clemens
(86) International application number: PCT/CN2015/098706
(87) International publication number: WO 2016/107491

(56) References cited:
- WO-A1-2014/210222
- CN-A- 103 020 049
- US-A- 5 657 450
- US-A1- 2005 289 098
- US-A1- 2010 211 588

## Description

### TECHNICAL FIELD OF THE INVENTION

The present disclosure relates generally to database management systems and, in particular, to a system and method for providing alternate query suggestions for time bound results.

### BACKGROUND

Generally, Big data comprises a collection of large and complex data stored in a Big Data Store (referred as data store). The large and complex data are stored in a form of data blocks which are generally indexed, sorted and compressed. The data store provides efficient tools to explore the data in the data store to provide response to one or more queries specified by a user.

Queries on Big data consume a lot of time. The response time may range from several hours to few days. Hence, usually only background/batch processing is performed on big data and the users cannot make timely decisions. Further users have no idea how long a query will take to execute and thus the users cannot do any time bound analysis.

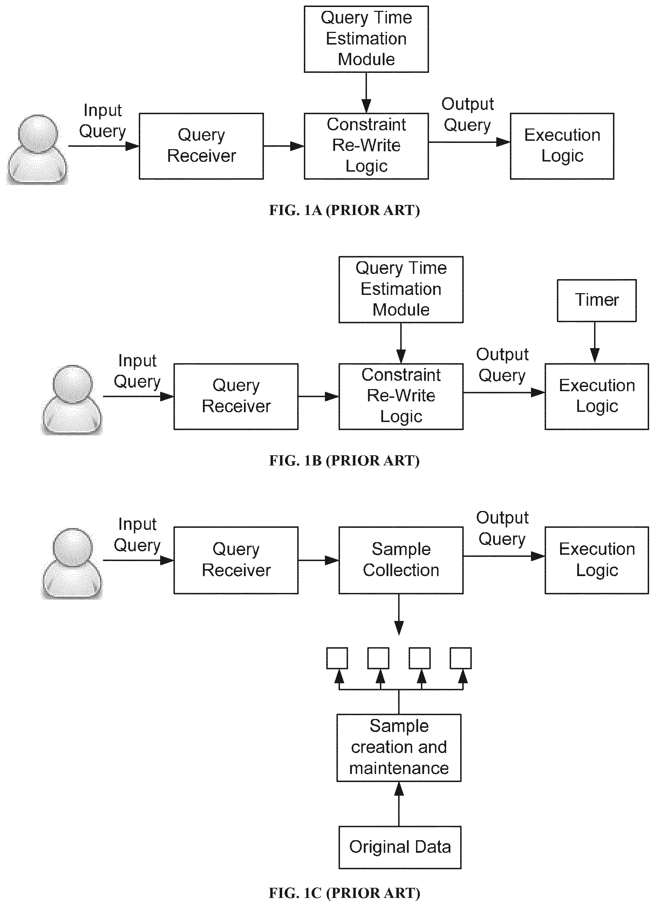

There are few conventional methods for time bound analysis on big data. Fig. 1A uses the approach of soft time constraints for query execution in Relational Database Management System (RDBMS). In this approach a logic module adds simple constraints to the query to reduce query execution time to user expected time. In this conventional method, two types of constraints are added namely row number constraint and sample percentage constraint. The row number constraint adds a row number limit to the query so that the query may finish faster. In this method, the query result may be provided in user expected time, but the user may not get the complete result. The sample percentage constraint reads only a sample of the data from the storage. In this method, the query may finish faster, may be in user expected time, but the user may not get the accurate result. Overall, this approach does not guarantee that the query will complete in the user expected time. However, the query may finish close to user expected time. And, if the result to the query execution is provided within user expected time, the results may be partial and not complete.

Fig. 1B uses the approach of hard time constraints for query execution. This approach is similar to the soft time constraints approach. Additionally, a timer is added to halt the query execution if it exceeds the user specified time. This approach ensures that either the query will finish within the user specified time or the query will be terminated.

Another conventional method uses predefined samples approach where sampled buckets of data are pre-created and then one sample is selected during query to restrict the query time. In this method, the query may not run on entire data in the data store. Main aspect of this approach is that this approach creates multiple different sampled buckets of the original data, which is an offline operation. Then, based on the user expected time, the method selects a proper sampled bucket such that the query execution on that bucket can complete in the user specified time. This approach however does not guarantee that the query will complete in the user expected time. However, the query will finish close to user expected time but the final result may not be accurate. The final result will be computed based on partial data, which may not be useful for the users. Such query execution will just be a waste of system resources as well as user time.

Another conventional approach involves increasing the processing hardware to support time bound analysis. The hardware can modelled such that extra processing resources can be requested on the fly. Therefore, hardware size can be determined based on query time limit and amount of work to be done. Disadvantages of this approach are that the approach is very costly and almost not feasible to use.

US 2005/0289098 A1 discloses improved methods, systems, and computer program products for enhancing query optimization. More particularly, it relates to dynamically selecting alternative query access plans.

### SUMMARY

The objective of the present disclosure is to method for providing alternate query suggestions for time bound results.

Additional features and advantages are realized through the techniques of the present disclosure. Other embodiments and aspects of the invention are described in detail herein and are considered a part of the claimed invention.

The present disclosure relates to a method of providing alternate query suggestions for time bound results. The method comprises one or more steps performed by a query suggestion server. The first step comprises receiving a query comprising one or more dimensions and a target time for executing the query from a user device associated to a user. The second step comprises determining, in real time, by the query suggestion server, execution time for the received query. The third step comprises if the execution time for the received query is less than the target time executing the query and the query result is provided to the user or if the execution time for the received query is more than the target time identifying one or more alternate query suggestions. The last step comprises providing the one or more alternate query suggestions to the user device for modifying the query.

In an embodiment, the method of present disclosure comprises receiving, by the query suggestion server, selection of one of the one or more alternate query suggestions from the users. The method further comprises modifying the query based on the selection. In an embodiment, the one or more alternate query suggestion may be selected by the user fully or partially. Further, the method comprises performing at least one of providing one or more subsequent alternate query suggestions upon determining the execution time for the modified query exceeding the target time, or providing the result of the modified query upon determining the execution time for the modified query within the target time.

In an embodiment, if the one or more alternate query suggestion is selected fully, then the query execution time is less than the target time. This is because, the one or more alternate query suggestions are determined such that their execution time is less than the target time specified by the user.

In an embodiment, if the one or more alternate query suggestion is selected partially, then the execution time for the modified query with partial selection needs to be recalculated.

A query suggestion server is disclosed in the present disclosure for providing alternate query suggestions for time bound results. The query suggestion server comprises a receiving module for receiving a query comprising one or more dimensions and a target time for executing the query from a user device associated to a user. The system further comprises a query time estimation module for determining, in real time, execution time for the received query. The system also comprises a query evaluation and alteration module for executing the query and the query result is provided to the user if the execution time for the received query is less than the target time, or for identifying one or more alternate query suggestions if the execution time for the received query is more than the target time. Further, the system comprises an alternate query suggestion output module for providing the one or more alternate query suggestions to the user device for modifying the query.

In an embodiment, the query suggestion server is further configured to perform one or more acts. The acts comprise selection of one of the one or more alternate query suggestions from the users. The act further comprises modifying the query based on the selection. In an embodiment, the one or more alternate query suggestion may be selected by the user fully or partially. Further, the act comprises performing at least one of providing one or more subsequent alternate query suggestions upon determining the execution time for the modified query exceeding the target time, or providing the result of the modified query upon determining the execution time for the modified query within the target time.

In an embodiment, if the one or more alternate query suggestion is selected fully, then the query execution time is less than the target time. This is because, the one or more alternate query suggestions are determined such that their execution time is less than the target time specified by the user.

In an embodiment, if the one or more alternate query suggestion is selected partially, then the execution time for the modified query with partial selection needs to be recalculated.

The present disclosure relates to a non-transitory computer readable medium including operations stored thereon that when processed by at least one processor cause a query suggestion server to perform one or more actions by performing the acts of receiving a query comprising one or more dimensions and a target time for executing the query from a user device associated to a user. Then, act of determining, in real time execution time for the received query is performed. Further, if the execution time for the received query is less than the target time act of executing the query and the query result is provided to the user, or if the execution time for the received query is more than the target time act of identifying one or more alternate query suggestions is performed. Lastly, act of providing the one or more alternate query suggestions to the user device for modifying the query is performed

The present disclosure relates to a computer program for performing one or more actions on a query suggestion server. The said computer program comprising code segment for receiving a query comprising one or more dimensions and a target time for executing the query from a user device associated to a user. The computer program also comprises code segment for determining, in real time execution time for the received query. The computer program also comprises code segment for executing the query and the query result is provided to the user if the execution time for the received query is less than the target time, or for identifying one or more alternate query suggestions if the execution time for the received query is more than the target time. The computer program also comprises code segment for providing the one or more alternate query suggestions to the user device for modifying the query.

In an embodiment, the present disclosure helps the user to make faster business decisions as the queries execute within bounded time. Also, the present disclosure provides better user experience as user knows in advance that their query will take more time and the system helps user to alter the query to a faster query. In an embodiment, embodiments of the present invention provide an option to the user to choose the different parameters for altering the query based on their business needs. The present disclosure reduces load on server as users are guided by the system to alter the query to simpler/faster queries. Therefore, the same server can support more users to do analysis in parallel. The present disclosure optimizes query execution by saving time, cost and computing resources.

The foregoing summary is illustrative only and is not intended to be in any way limiting. In addition to the illustrative aspects and features described above, further aspects, and features will become apparent by reference to the drawings and the following detailed description. Any reference to "embodiment(s)", "example(s)" or "aspect(s) of the invention" in this description not falling under the scope of the claims should be interpreted as illustrative example(s) for understanding the invention.

### BRIEF DESCRIPTION OF THE ACCOMPANYING DRAWINGS

The novel features and characteristic of the present disclosure are set forth in the appended claims. The embodiments of the present invention itself, however, as well as a preferred mode of use, further objectives and advantages thereof, will best be understood by reference to the following detailed description of an illustrative embodiment when read in conjunction with the accompanying drawings. One or more embodiments are now described, by way of example only, with reference to the accompanying drawings.
Figures 1A, 1B and 1C illustrate methods for providing query results within user specified time in accordance with prior art;
Figure 2A shows exemplary network architecture for providing alternate query suggestions for time bound results in accordance with some embodiments of the present invention;
Figure 2B shows method of storing data in data store in accordance with some embodiments of the present invention;
Figure 3A shows detailed block diagram of query suggestion server in accordance with some embodiments of the present invention;
Figure 3B shows method for estimating approximate time for executing a query in accordance with some embodiments of the present invention;
Figure 4A illustrates a flowchart showing method for providing alternate query suggestions for time bound results in accordance with some embodiments of the present invention;
Figure 4B illustrates a flowchart showing method for providing subsequent alternate query suggestions for time bound results in accordance with some embodiments of the present invention;
Figure 5 illustrates a detailed flowchart showing method for providing alternate query suggestions for time bound results in accordance with some embodiments of the present invention;
Figure 6A to 6F shows exemplary snapshots of providing alternate query suggestions in accordance with some embodiments of the present invention; and
Figure 7 illustrates a block diagram of an exemplary computer system for implementing embodiments consistent with the present disclosure.

The figures depict embodiments of the present invention for purposes of illustration only. One skilled in the art will readily recognize from the following description that alternative embodiments of the structures and methods illustrated herein may be employed without departing from the principles of the present disclosure described herein.

### DETAILED DESCRIPTION

The foregoing has broadly outlined the features and technical advantages of the present disclosure in order that the detailed description of the present disclosure that follows may be better understood. Additional features and advantages of the present disclosure will be described hereinafter which form the subject of the claims of the invention. It should be appreciated by those skilled in the art that the conception and specific aspect disclosed may be readily utilized as a basis for modifying or designing other structures for carrying out the same purposes of the present disclosure. It should also be realized by those skilled in the art that such equivalent constructions do not depart from the scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

Embodiments of the present invention relate to a method and a system for providing alternate query suggestions for time bound results. The user provides a query on data store, i.e. big data store along with a soft time limit for receiving the query results. The query suggestion server determines the approximate execution time for the query. If the query could not be executed within the soft time limit specified by the user, the query suggestion server provides one or more alternate query suggestions to the user. The suggestions provided by the system are such that the execution time of the one or more alternate query suggestions is within the soft time limit provided by the user. The user may select one of one of the one or more alternate query suggestions provided by the query suggestion server. The query is then modified based on the user selection In an embodiment, if the one or more alternate query suggestion is selected fully, then the query execution time is less than the target time. This is because, the one or more alternate query suggestions are determined such that their execution time is less than the target time specified by the user. In an embodiment, if the one or more alternate query suggestion is selected partially, then the execution time for the modified query with partial selection needs to be recalculated.. The query suggestion server further analyzes whether the modified query can be executed within the soft time limit mentioned by the user. If the modified query can be executed within the soft time limit, the query is executed and query results are provided to the user. In the alternative, if the modified query cannot be executed within the soft time limit mentioned by the user, then the query suggestion server provides one or more subsequent alternate query suggestions. The user may further select one of the one or more subsequent alternate query suggestions suggested by the system. This method can be continued until the query may be executed within the soft time limit. Finally, the query is executed and results are displayed to the user.

Henceforth, embodiments of the present invention are explained with the help of exemplary diagrams and one or more examples. However, such exemplary diagrams and examples are provided for the illustration purpose for better understanding of the present invention and should not be construed as limitation on scope of the present invention.

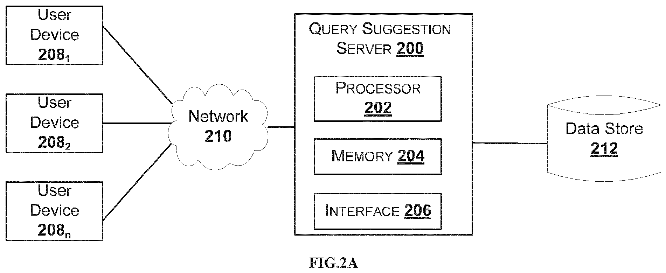

**Figure 2A** shows exemplary network architecture for providing alternate query suggestions for time bound results in accordance with some embodiments of the present invention.

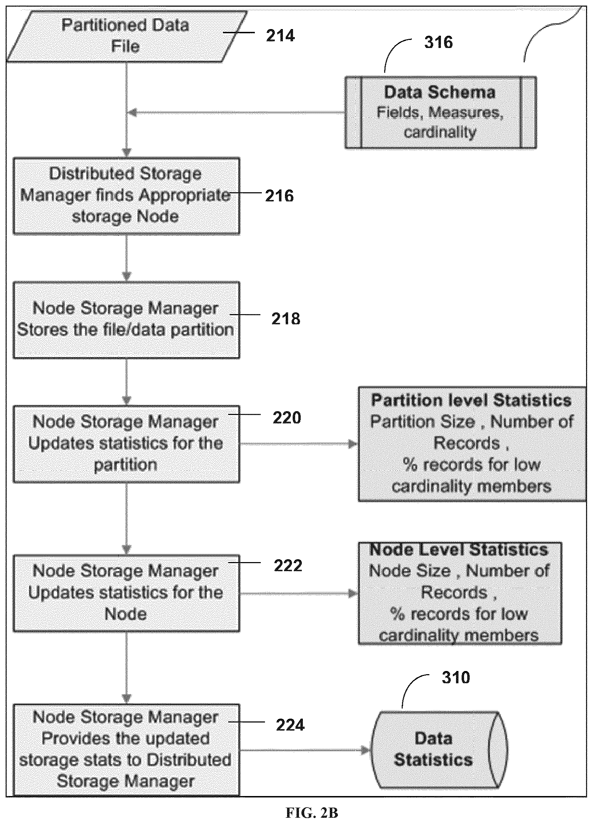

As shown in **figure 2****,** then architecture comprises a query suggestion server **200** for providing alternate query suggestions. The architecture also comprises one or more user devices **208₁, 208₂, ...208ₙ** (collectively referred to as user devices **208**) and a data store **212** connected to the query suggestion server **200.** As shown in the **figure 2****,** such user devices **208** are communicatively coupled to a query suggestion server **202** through a network **210** for facilitating querying the data store **212** for information.

The user devices **208** comprise an application program that uses the services of the query suggestion server **200.** The user devices **208** with the application program may be implemented in a variety of computing systems, such as a laptop computer, a desktop computer, a notebook, a workstation, a mainframe computer, a server, a network server, and the like. The user devices **201** may be used by various stakeholders or end users of the organization, such as project managers, executives and employees

In an embodiment, the user devices **208** are used by associated users to create one or more queries. The user devices **208** are installed with one or more interfaces (not shown in **figure 2**) for communicating with the q **200** over the network **210.**

In one implementation, the query suggestion server **200,** as shown in **figure 2****,** includes a central processing unit ("CPU" or "processor") **202,** a memory **204** and an interface **206.** The processor **202** may comprise at least one data processor for executing program components and for executing user- or system-generated requests. A user may include a person, a person using a device such as those included in this invention, or such a device itself. The processor **202** is configured to fetch and execute computer-readable instructions stored in the memory **204.** In one implementation, the memory **204** is communicatively coupled to the processor **202.** The memory **204** stores processor-executable instructions to provide alternate query suggestions to the users. The query suggestion server **200** may include the input/output (I/O) interface **206** for communicating with the one or more user devices **208.**

In an implementation, the query suggestion server **200** also acts as user device. Therefore, the one or more queries are directly received at the query suggestion server **202** for query execution and user interaction.

The data store **212** stores big data information. The information stored in the data store **303** may be related to one or more establishments, including, but are not limited to, financial institutions, stocks, commercial establishments, government offices, data security centers, social networks, educational institutions, weather forecast centers and manufacturing industries. For example, data store **212** stores information relating to mobile subscribers, model name of the mobile device i.e. mobile phone, subscribing data, traffic usage of a subscribing network, bandwidth provided by the subscribed plan, International Mobile Equipment Identity (IMEI) details, brand name of the mobile device, and subscribed plan details etc. which falls under commercial establishments. In an exemplary embodiment, information of one or more establishments are stored in the data store **212** in predefined format or structures or extensions, such as but are not limiting to, a flat file, a hierarchical on-line analytical processing data cube, a multidimensional cubes, a relational data store, an on-line analytical processing (OLAP) data cube and an Excel file. A person skilled in the art should understand that there can be any number of data stores that stores big data information.

**Figure 2B** shows method of storing data in data store **212** in accordance with some embodiments of the present invention. First, the partitioning scheme for the data is decided. Consider the below table **Table1,**

**TABLE 1**

| FIELD | TYPE | CARDINALITY |
|---|---|---|
| IMSI | Dimension(High cardinality) | 100 million |
| UserPlan | Dimension | 10 |
| Time | Dimension | 30 days |
| Protocol | Dimension | 300 |
| City | Dimension | 100 |
| TerminalType | Dimension | 300 |
| Bandwidth | Dimension | NA |

In above table, the first level partition is by 'IMSI' and second level is by 'Time' dimension. Consider there are 1 million IMSI and 10 storage nodes. So, each node stores data for 100K IMSI (first level partition). Then, consider that new data is loaded every hour (second level partition). So, a partition corresponds to one hour data file and in a day, each node gets 24 such partitions/files.

At **block 214,** a partitioned data file is received. Then, at **block 216,** a distributed storage manager (not shown) decides which node should store this partitioned file and forwards the storage request to chosen storage manager of the node (not shown).The distributed storage manager uses data schema, which includes information on fields, measures and cardinality to make the decision.

At **block 218,** the node storage manager stores the partitioned file in the data store **212.**

At **block 220,** the node storage manager updates the partition level statistics when loading the data to partition. In an embodiment, the node storage manager updates partition size, number of records, % records for low cardinality member etc.

At **block 222,** the node storage manager also computes and updates node level statistics based on new data. In an embodiment, the node storage manager updates node size, number of records, % records for low cardinality members etc.

At **block 224,** the node storage manager then communicates these updated statistics to a central storage manager (not shown) which updates the data statistics **310.** In an exemplary embodiment, the data statistics are saved for low cardinality fields only.

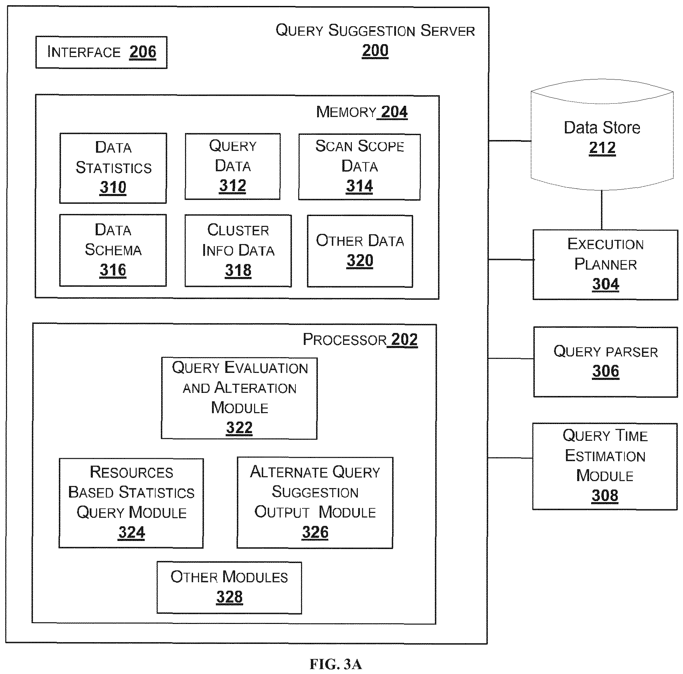

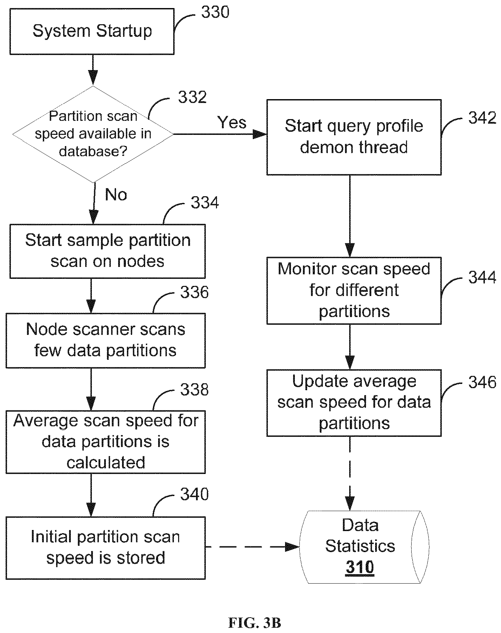

**Figure 3** shows detailed block diagram of query suggestion server in accordance with some embodiments of the present invention.

In one implementation, the query suggestion server **200** may be implemented in a variety of computing systems, such as a laptop computer, a desktop computer, a notebook, a workstation, a mainframe computer, a server, a network server, and the like. In an embodiment, the query suggestion server **200** is communicatively connected to the data store **212,** an execution planner **304,** a query parser **306** and a query time estimation module **308.**

In one implementation, the one or more queries created by the user by using the one or more user devices are received by query parser **306.** The query executor **306** is communicatively connected to the one or more user devices **301.** In an embodiment, the one or more queries include, but are not limited to, Multidimensional Expressions (MDX) based queries, Relational Database Management System (RDMS) based queries, Structured Query Language (SQL) based queries, Not Only Structured Query Language (NoSQL) based queries, semi-structured queries based queries, and unstructured queries based queries.

In one implementation, the execution planner **304** is configured to receive one or more queries and dimensions in the query from the query parser **306.** Then, the execution planner **304** decides the best plan to execute the query based on one or more parameters. The one or more parameters may include number of threads to be used for query execution, amount of data that can be read from cache memory, and amount of data to be read from data store, whether Join command should be done after querying all the data or after querying small batches of data. The execution planner **304** is connected to the data store **212** for planning the execution of the queries.

In one implementation, the query time estimation module **308** estimates the approximate time required for a query to execute. In an embodiment, the execution time is determined based on at least one of data scan scope for the query, resources available to perform scan computations required, network Input/ Output and scan speed for executing the query in the data store **212.** Also, the current state of cluster like available resources including CPU, memory etc. is used to determine the execution time. The execution planner **304** may provide multiple plans for executing the query and query time estimation module **308** provides approximate execution time for each of the plan. Based on the information, the execution planner **304** decides decide which plan can execute faster.

In an embodiment, the method for estimating the approximate time for executing a query is described in **Fig. 3B****.** First, when a system starts up at **block 330,** a check is made to determine if partition scan statistics are available in the memory **204.** If not available, the method proceeds to **block 334.** At **block 334,** the query time estimation module **308** calculates the scan speed by starting a sample scan on few partitions. Then, at **block 336,** node scanner scans few data partitions. Then, at **block 338,** an average scan speed for data partitions is calculated. The calculated scan speed is updated in the data statistics **310** at **block 340.** In the alternative, if the partition scan speed is available, the method proceeds to **block 342.** At **block 342,** the system has a demon thread which profiles the real-time scan speed for partitions when a query is being executed. Then, at **block 344,** scan speed for different partitions is monitored. Then, the calculated speed is updated in the data statistics **310** at **block 346.**

In an embodiment, the query suggestion server **200** receives data relating to the query results from the execution planner **304,** the query parser **306** and the query time estimation module **308.** In one example, the data may be stored within the memory **204.** In one implementation, the data may include, for example, data statistics **310,** query data **312,** scan scope data **314,** data schema **316,** cluster info data **318** and other data **320.**

In an embodiment, the data statistics **310** comprises statistical information regarding the data stored in the data store **212.** The data statistics may include, but is not limited to, number of partitions, distribution of data in each partition etc.

The query data **312** includes the information regarding the query raised by the user and one or more dimensions in the query.

The scan scope data **314** comprises the number of partitions to be scanned for executing the query.

The data schema **316** comprises information regarding the structure of data like number of fields/columns, name and type of each field, cardinality of fields, facts, indexes, storage order/format.

The cluster info data **318** comprises information on nodes, available threads per node, data partition strategy etc. For example, the number of nodes is 10, data partition ids 100000 International Mobile Subscriber Identity (IMSI) per node, time partition is one file per hour and scan threads per node is 10.

Also, the computation information may be stored in the computation statistics. The computation statistics may include network speed, disk Input/Output throughput, network I/O throughput, speed level throughput for different operations like join, sort by etc.

In one embodiment, the data may be stored in the memory **204** in the form of various data structures. Additionally, the aforementioned data may be organized using data models, such as relational or hierarchical data models. The other data **320** may be used to store data, including temporary data and temporary files, generated by the modules in the processor **202** for performing the various functions of the query suggestion server **200.** In an embodiment, the data are processed by modules of the query suggestion server **200.** The modules may be stored within the memory **204.**

The modules may include, for example, a query evaluation and alteration module **322,** resources based statistics query module **324** and alternate query suggestion output module **326.** The query suggestion server **200** may also comprise other modules **328** to perform various miscellaneous functionalities of the query suggestion server **200.** It will be appreciated that such aforementioned modules may be represented as a single module or a combination of different modules.

In one implementation, the query evaluation and alteration module **322** is configured to evaluate the query and uses the statistics of the stored data in the data store **212** to identify the different alterations to the query that are possible. Then, the query evaluation and alteration module **322** decides the best options that can be suggested to the user. The alterations are such that the execution time of the altered query is within the target time mentioned by the user. In an embodiment, one or more alternate query suggestions are provided based on at least one of cardinality of the one or more dimensions, cardinality of other dimensions stored in a data store or statistics of data stored in the data store **212.**

The resources based statistics query module **324** is configured to query the statistical information regarding the data stored in the data store **212.** The statistics of data may include, but are not limited to, number of partitions, distribution of data in each partition etc.

In an embodiment, the alternate query suggestion output module **326** one or more alternate query suggestions to the user device for modifying the query. The execution time of the alternate query suggestions is within the target time mentioned by the user.

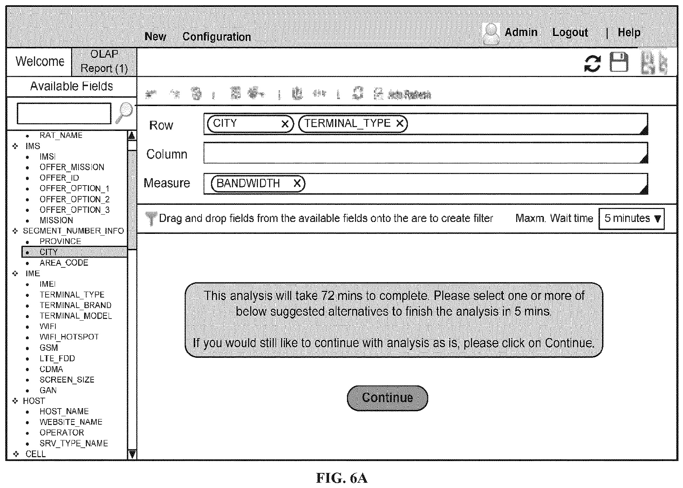

**Figure 6A** to **6F** shows exemplary snapshots of providing alternate query suggestions in accordance with some embodiments of the present invention. First, the user provides a query by selecting one or more fields from the dimensions in the data store **212.** The selection of one or more fields for creating a query by the user is illustrated in **Fig. 6A****.** Additionally, the user also provides a soft time limit for executing the query. The soft time limit refers to the target time within which the user intends to receive query results. In the example, the user selects 'city' and 'terminal_type' for the row field. Also, the user selects the measure as 'bandwidth'. Further, the user provides the target time as 5 minutes for executing the query. The query time estimation module **308** estimates the approximate time required to execute the query. Here, the query time estimation module **308** determines that execution time for the received query will take 72 minutes. As the execution time for the query is more than the target time specified by the user, the user interface provides the user with an option to view one or more alternate query suggestions. The one or more alternate query suggestions are such that the execution time of the alternate queries is within the target time mentioned by the user. Also, the user is provided with another option to continue the query execution as-is.

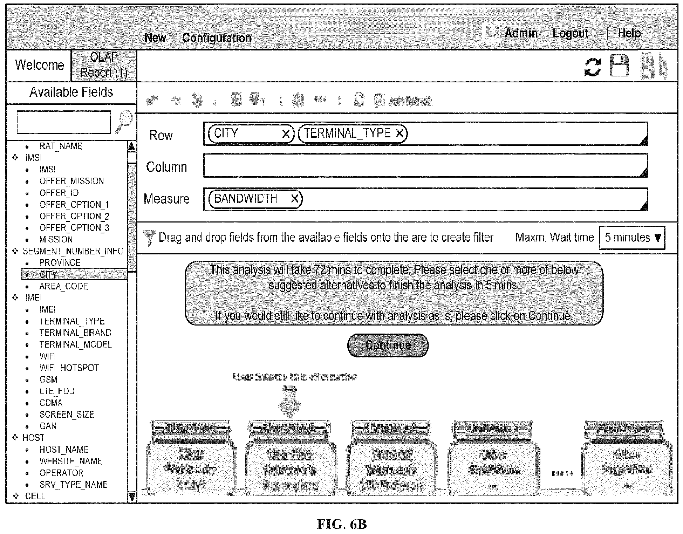

In **Fig. 6B****,** the user selects the option of viewing one or more alternate query suggestions. Then, the query evaluation and alteration module **322** provides one or more alternate query suggestion, wherein execution time of each of the alternate query suggestion is within the target time mentioned by the user. The one or more alternate query suggestions may include, but is not limited to, narrowing the scope of the query to two days, narrowing the scope of the query to only 3 user plans and narrowing the scope of the query to only 150 protocols. The user selects second alternate, wherein the data store **212** will be queried for only three user plans. In an embodiment, the user may also modify the target time.

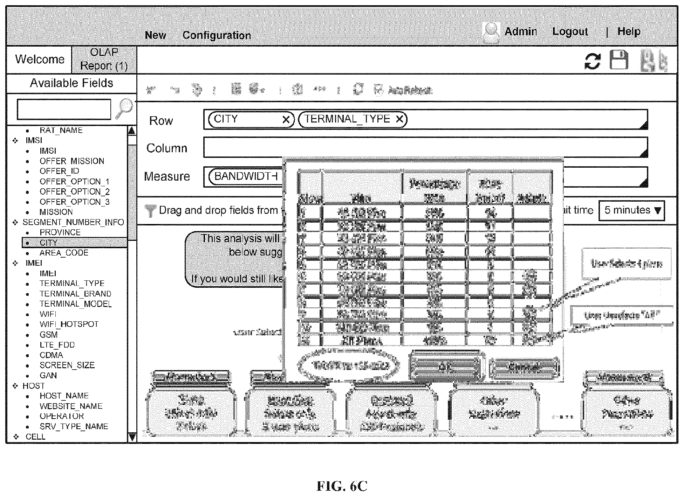

In **Fig. 6C****,** the user interface is provided with a list of user plans for selection of few user plans by the user. The user selects 5 user plans instead of 3 user plans as suggested by the system. The user is provided with the modified execution time as 15 minutes based on the selection in real-time.

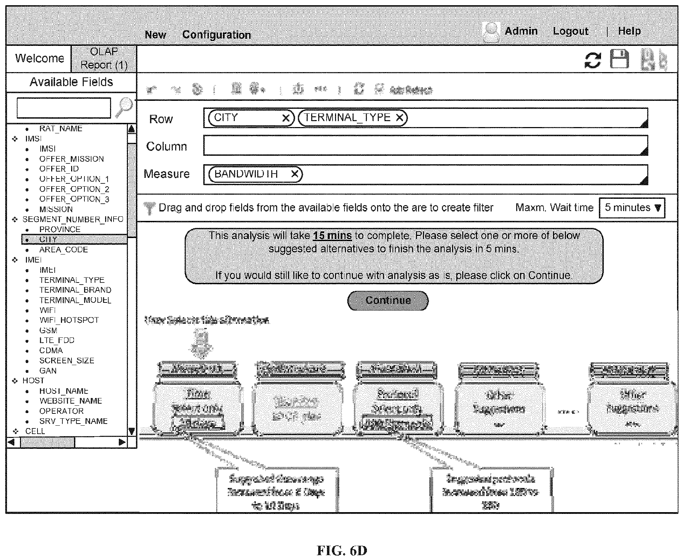

In **Fig. 6D****,** the modified query execution time is displayed to the user. Now, based on the selection of the alternate query suggestion, the execution time is reduced from 72 minutes to 15 minutes. However, as the modified execution time is still exceeding the target time provided by the user, i.e. 5 minutes, the query evaluation and alteration module **322** provides subsequent alternate query suggestions to the user. The subsequent alternate query suggestions are provided based on the selected alternate query suggestion. The execution time of the subsequent alternate query suggestions is within the target time provided by the user. In an embodiment, the query evaluation and alteration module **322** continues providing the alternate query suggestions until the execution time is equal to or less than the target time.

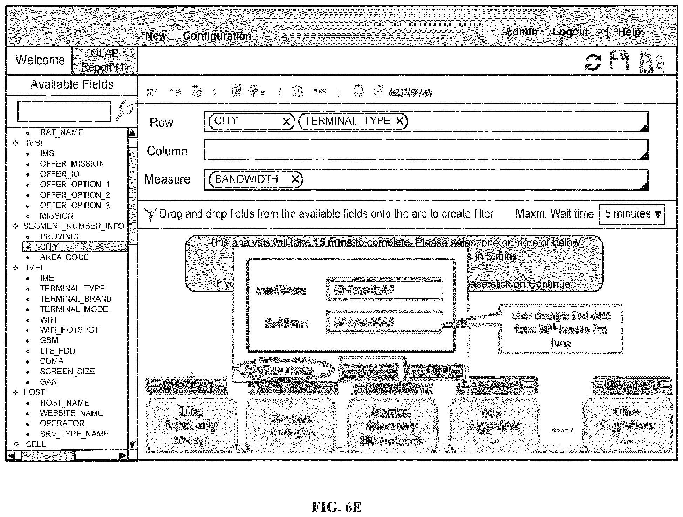

In **Fig. 6E****,** the user selects one subsequent alternate query suggestion from the plurality of subsequent alternate query suggestions provided by the query evaluation and alteration module **322.** As an example, the query evaluation and alteration module **322** suggested to reduce the scope of query to 10 days. However, the user selects the time range to 7 days only. The modified execution time for executing the modified query is determined as 4 minutes.

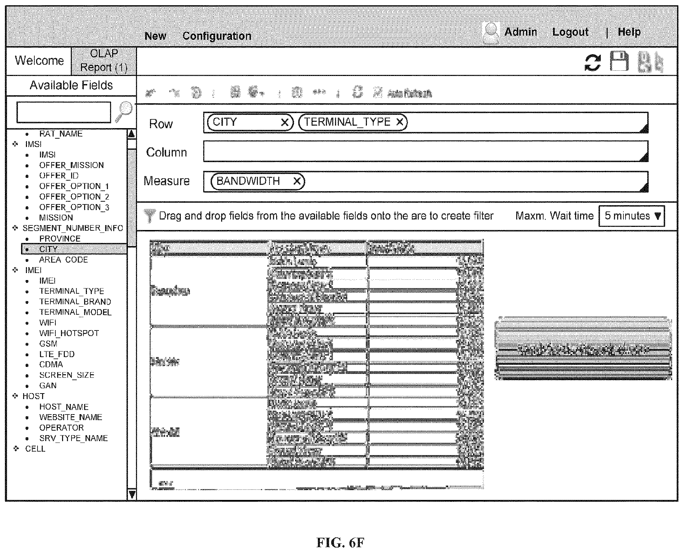

Finally, the execution time for executing the modified query is within the target time mentioned by the user. Therefore, the query is executed and result of the query is displayed to the user on the user device **208** as illustrated in **Fig. 6F****.**

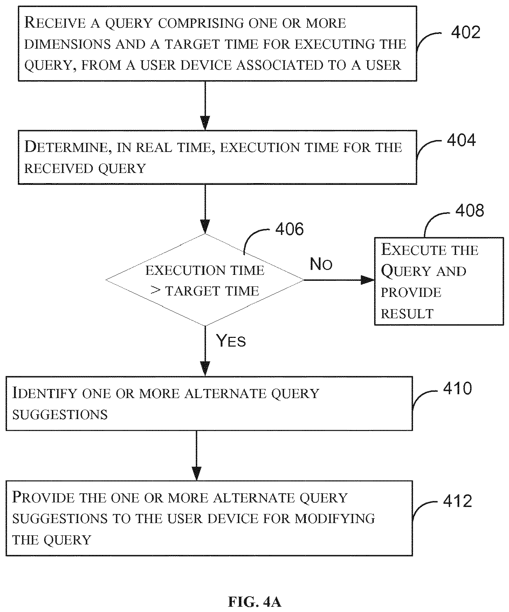

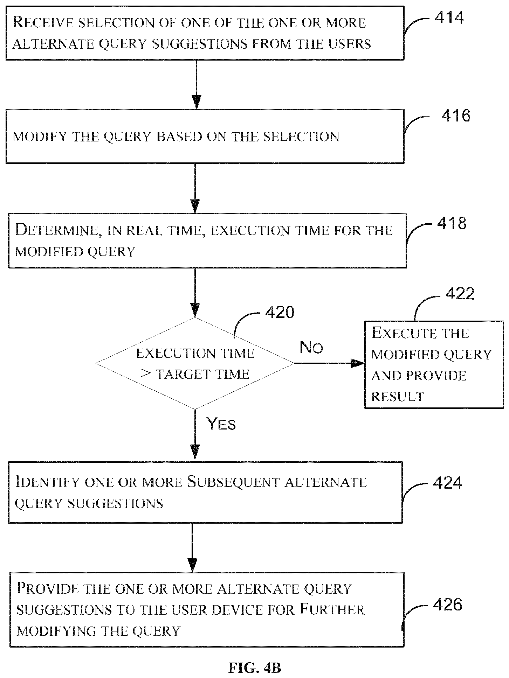

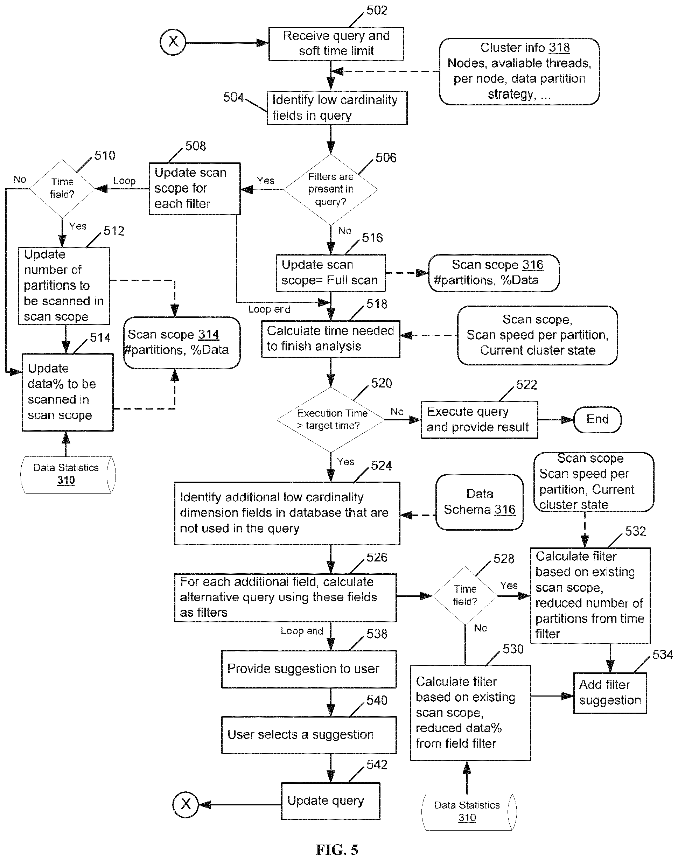

As illustrated in **Figure 4A****,** **4B** **and** **5****,** the methods **400, 401** and **500** comprises one or more blocks for providing alternate query suggestions by the query suggestion server **200.** The methods **400, 401** and **500** may be described in the general context of computer executable instructions. Generally, computer executable instructions can include routines, programs, objects, components, data structures, procedures, modules, and functions, which perform particular functions or implement particular abstract data types.

The order in which the methods **400, 401** and **500** are described is not intended to be construed as a limitation, and any number of the described method blocks can be combined in any order to implement the methods **400, 401** and **500.** Additionally, individual blocks may be deleted from the methods **400, 401** and **500** without departing from the spirit and scope of the subject matter described herein. Furthermore, the methods **400, 401** and **500** can be implemented in any suitable hardware, software, firmware, or combination thereof.

**Figure 4A** illustrates a flowchart showing method for providing alternate query suggestions for time bound results in accordance with some embodiments of the present invention.

At **block 402,** receive query comprising one or more dimensions and a target time for executing the query. In an embodiment, the query parser **306** receives the queries from one or more user devices **208.**

At **block 404,** determine in real time, execution time for the received query. In an embodiment, the execution time for the received query is determined by the query time estimation module **308.** In an embodiment, the term "real time" may be construed as immediately upon receiving the query.

At **block 406,** determine if the execution time of the received query is greater than the target time. If the execution time of the received query is less than the target time, the method proceeds to **block 408** via NO. At **block 408,** the query is executed and the query results are provided to the user. In the alternative, if the execution time of the received query is more than the target time, the method proceeds to **block 410** via YES.

At **block 410,** identify one or more alternate query suggestions. In an embodiment, the execution time of the alternate query suggestions is within the target time provided by the user.

At **block 412,** provide the one or more alternate query suggestions to the user device for modifying the query.

**Figure 4B** illustrates a flowchart showing method for providing subsequent alternate query suggestions for time bound results in accordance with some embodiments of the present invention.

At **block 414,** receive selection of one of the one or more alternate query suggestions from the users.

At **block 416,** modify the query based on the selection.

At **block 418,** determine, in real time, execution time for the modified query.

At **block 420,** determine if the execution time of the modified query is greater than the target time. If the execution time of the modified query is less than the target time, the method proceeds to **block 422** via NO. At **block 422,** the modified query is executed and the query results are provided to the user. In the alternative, if the execution time of the modified query is more than the target time, the method proceeds to **block 424** via YES.

At **block 422,** provide one or more subsequent alternate query suggestions upon determining the execution time for the modified query exceeding the target time.

**Figure 5** illustrates a detailed flowchart showing method for providing alternate query suggestions for time bound results in accordance with some embodiments of the present invention.

At **block 502,** the user issues a query with soft time limit, which is received by the query parser **306.**

At **block 504,** the query parser **306** parses the query and identifies the low cardinality fields in the query. The query parser uses the data statistics **310** to determine the low cardinality fields of the query.

At **block 506,** the query suggestion server **200** determines if there are any filters on low cardinality fields or the time fields. If no filters are present, the method moves to **block 516** via 'NO'. At **block 516,** the scan scope of the query is updated to full scan, i.e. the scan is to be performed on 100% data and partitions.

In the alternative, if filters are present, the method moves to **block 508** via 'YES'. At **block 508,** a loop is started to update the scan scope for each filter present in the query.

At **block 510,** a check is performed to determine if the filter is present in time field. If the filter is present in time field, the method moves to **block 512** via 'YES'. At **block 512,** the query suggestion server **200** trims down the number of partitions required to be scanned based on the time. Then, the scan scope **314** is updated with number of partitions.

In the alternative, if the filter is present on non-time field, the method moves to **block 514** via 'NO. At **block 514,** the percentage of data corresponding to the filter is retrieved from data statistics **310.** For example, Data Plan = 10 GB plan filter has 20% data as per statistics, and scan scope is updated with % of data to be scanned.

The **block 510** loop is repeated for each filter in the query. Once the loop ends, the method moves to **block 518.**

At **block 518,** the time required for scanning the data store **212** for executing the query is calculated. This is performed by using partition scan scope, scan speed data and number of scan threads available. Also, data scan scope for the query, resources available to perform scan computations required, network Input/ Output and scan speed for executing the query in the data store **212,** current state of cluster like available resources including CPU, memory etc. is used to determine the execution time.

At **block 520,** a check is made to determine if the execution time of the query is greater than the target time. If the execution time is not greater the target time, the method moves to **block 522** via 'NO'. At **block 522,** the query is executed and query results are provided to the user.

In the alternative, if the execution time of the query exceeds the target time, the method proceeds to **block 524** via 'YES'. At **block 524,** the query suggestion server **200** identifies additional low cardinality dimension fields in the data store **212** that may or may not be used in the query. At **block 526,** determine alternative query for each of the fields as filters. For example, in **Fig. 6B****,** the fields in the query are city, terminal_type and bandwidth. However, the alternate query suggestions include additional low cardinality fields, such as user plan, protocol etc., which are not mentioned in the query.

Then at **block 528,** a check is made to determine if these additional fields are time fields. If these additional fields are time fields, the method moves to **block 532** via 'YES'.

At **block 532,** calculate the number of partitions that can be scanned within the given target time. Then, convert the number of partitions to time range filter on data and add it as an alternative query suggestion at **block 534.**

In the alternative, if the additional fields are non-time field, the method moves to **block 530** via 'NO'. At **block 530,** check what percentage of data is stored for different values of the additional fields in the data statistics **310.** Then, calculate the % data reduction required based on specified target time and determine how many values can be accommodated within this % range. This information is passed to **block 534,** which is then added to alternative query suggestion. suggestion.

The **block 528** loop is repeated for all the additional fields. After the loop ends, the method moves to **block 538.** At **block 538,** alternative query are suggested for the values identified.

At **block 540,** user selects one of the suggested options. At **block 542,** the updated query is provided to the system for further alternative suggestions/execution

### Computer System

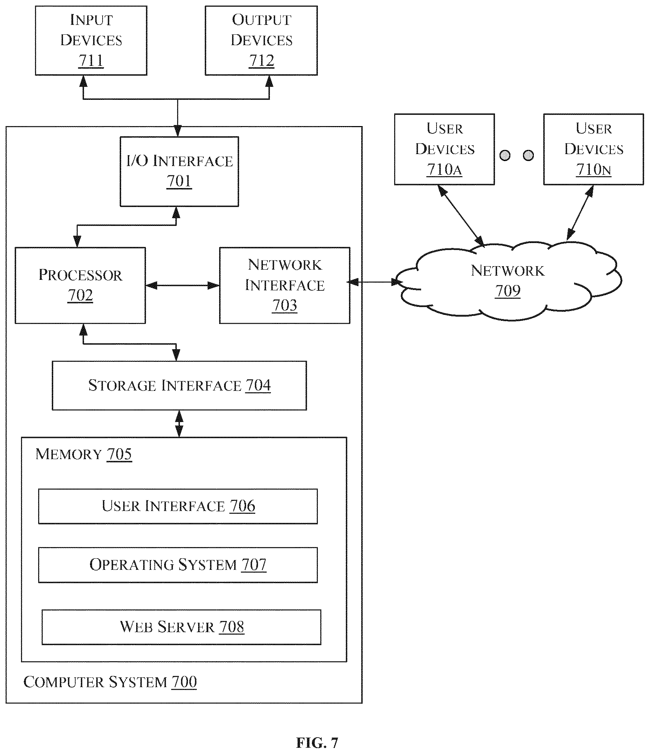

**Figure 7** illustrates a block diagram of an exemplary computer system **700** for implementing embodiments consistent with the present disclosure. In an embodiment, the computer system **700** is used to implement the query suggestion server **200.** The computer system **700** provides alternate query suggestions for time bound analysis by a user. The computer system **700** may comprise a central processing unit ("CPU" or "processor") **702.** The processor **702** may comprise at least one data processor for executing program components for executing user- or system-generated business processes. A user may include a person, a person using a device such as such as those included in this disclosure, or such a device itself. The processor **702** may include specialized processing units such as integrated system (bus) controllers, memory management control units, floating point units, graphics processing units, digital signal processing units, etc.

The processor **702** may be disposed in communication with one or more input/output (I/O) devices (**711** and **712**) via I/O interface **701.** The I/O interface **701** may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface **701,** the computer system **700** may communicate with one or more I/O devices (**711** and **712**). For example, the input device **711** may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. The output device **712** may be a printer, fax machine, video display (e.g., Cathode Ray Tube (CRT), Liquid Crystal Display (LCD), Light-Emitting Diode (LED), plasma, Plasma Display Panel (PDP), Organic Light-Emitting Diode Display (OLED) or the like), audio speaker, etc.

In some embodiments, the processor **702** may be disposed in communication with a communication network **709** via a network interface **703.** The network interface **703** may communicate with the communication network **709.** The network interface **703** may employ connection protocols including, without limitation, direct connect, Ethernet (e.g., twisted pair 10/100/1000 Base T), Transmission Control Protocol/Internet Protocol (TCP/IP), token ring, IEEE 802.11a/b/g/n/x, etc. The communication network **709** may include, without limitation, a direct interconnection, Local Area Network (LAN), Wide Area Network (WAN), wireless network (e.g., using Wireless Application Protocol), the Internet, etc. Using the network interface **703** and the communication network **709,** the computer system **700** may communicate with data aggregator or sensors **710.**

In some embodiments, the processor **702** may be disposed in communication with a memory **705** (e.g., RAM, ROM, etc. not shown in **figure 7**) via a storage interface **704.** The storage interface **704** may connect to memory **705** including, without limitation, memory drives, removable disc drives, etc., employing connection protocols such as Serial Advanced Technology Attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory **705** may store a collection of program or database components, including, without limitation, user interface application **706,** an operating system **707,** web server **708** etc. In some embodiments, computer system **700** may store user/application data **706,** such as the data, variables, records, etc. as described in this disclosure. Such databases may be implemented as fault-tolerant, relational, scalable, secure databases such as Oracle or Sybase.

The operating system **707** may facilitate resource management and operation of the computer system **700.** Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface **717** may facilitate display, execution, interaction, manipulation, or operation of program components through textual or graphical facilities. For example, user interfaces may provide computer interaction interface elements on a display system operatively connected to the computer system **700,** such as cursors, icons, check boxes, menus, scrollers, windows, widgets, etc. Graphical User Interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the computer system **700** may implement a web browser **708** stored program component. The web browser may be a hypertext viewing application, such as Microsoft Internet Explorer, Google Chrome, Mozilla Firefox, Apple Safari, etc. Secure web browsing may be provided using Secure Hypertext Transport Protocol (HTTPS), Secure Sockets Layer (SSL), Transport Layer Security (TLS), etc. Web browsers may utilize facilities such as AJAX, DHTML, Adobe Flash, JavaScript, Java, Application Programming Interfaces (APIs), etc. In some embodiments, the computer system **700** may implement a mail server **719** stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as Internet Message Access Protocol (IMAP), Messaging Application Programming Interface (MAPI), Microsoft Exchange, Post Office Protocol (POP), Simple Mail Transfer Protocol (SMTP), or the like. In some embodiments, the computer system **700** may implement a mail client stored program component. The mail client may be a mail viewing application, such as Apple Mail, Microsoft Entourage, Microsoft Outlook, Mozilla Thunderbird, etc.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., non-transitory. Examples include Random Access Memory (RAM), Read-Only Memory (ROM), volatile memory, nonvolatile memory, hard drives, CD ROMs, DVDs, flash drives, disks, and any other known physical storage media.

Additionally, advantages of present disclosure are illustrated herein.

Embodiments of the present invention help the user to make faster business decisions as the queries execute within bounded time.

Embodiments of the present invention provides better user experience as user knows in advance that their query will take more time and the system helps user to alter the query to a faster query.

Embodiments of the present invention provides better user experience as the user gets to choose the different parameters for altering the query based on their business needs.

The present disclosure reduces load on server as users are guided by the system to alter the query to simpler/faster queries. Therefore, the same server can support more users to do analysis in parallel.

The present disclosure optimizes query execution by saving time, cost and computing resources.

The described operations may be implemented as a method, system or article of manufacture using standard programming and/or engineering techniques to produce software, firmware, hardware, or any combination thereof. The described operations may be implemented as code maintained in a "non-transitory computer readable medium", where a processor may read and execute the code from the computer readable medium. The processor is at least one of a microprocessor and a processor capable of processing and executing the queries. A non-transitory computer readable medium may comprise media such as magnetic storage medium (e.g., hard disk drives, floppy disks, tape, etc.), optical storage (CD-ROMs, DVDs, optical disks, etc.), volatile and non-volatile memory devices (e.g., EEPROMs, ROMs, PROMs, RAMs, DRAMs, SRAMs, Flash Memory, firmware, programmable logic, etc.), etc. Further, non-transitory computer-readable media comprise all computer-readable media except for a transitory. The code implementing the described operations may further be implemented in hardware logic (e.g., an integrated circuit chip, Programmable Gate Array (PGA), Application Specific Integrated Circuit (ASIC), etc.).

Still further, the code implementing the described operations may be implemented in "transmission signals", where transmission signals may propagate through space or through a transmission media, such as an optical fiber, copper wire, etc. The transmission signals in which the code or logic is encoded may further comprise a wireless signal, satellite transmission, radio waves, infrared signals, Bluetooth, etc. The transmission signals in which the code or logic is encoded is capable of being transmitted by a transmitting station and received by a receiving station, where the code or logic encoded in the transmission signal may be decoded and stored in hardware or a non-transitory computer readable medium at the receiving and transmitting stations or devices. An "article of manufacture" comprises non-transitory computer readable medium, hardware logic, and/or transmission signals in which code may be implemented. A device in which the code implementing the described embodiments of operations is encoded may comprise a computer readable medium or hardware logic. Of course, those skilled in the art will recognize that many modifications may be made to this configuration without departing from the scope of the invention, and that the article of manufacture may comprise suitable information bearing medium known in the art.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise.

The terms "a", "an" and "the" mean "one or more", unless expressly specified otherwise.

A description of an embodiment with several components in communication with each other does not imply that all such components are required. On the contrary a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of **Figures 4A****,** **4B** **and** **5** show certain events occurring in a certain order. In alternative embodiments, certain operations may be performed in a different order, modified or removed. Moreover, steps may be added to the above described logic and still conform to the described embodiments. Further, operations described herein may occur sequentially or certain operations may be processed in parallel. Yet further, operations may be performed by a single processing unit or by distributed processing units.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method of providing alternate query suggestions for time bound results, comprising:
receiving (402), by a query suggestion server (200), a query comprising one or more dimensions and a target time for executing the query from a user device associated to a user;
the method being **characterized by**,
determining (404), in real time, by the query suggestion server (200), execution time for the received query;
if the execution time for the received query is less than the target time executing (408) the query and the query result is provided to the user, or
if the execution time for the received query is more than the target time identifying (410), by the query suggestion server (200), one or more alternate query suggestions; and
providing (412), by the query suggestion server (200), the one or more alternate query suggestions to the user device for modifying the query.

2. The method as claimed in claim 1, wherein execution time of the one or more alternate query suggestion is within the target time.

3. The method as claimed in claim 1, wherein the execution time is determined based on at least one of data scan scope for the query, data statistics, computation statistics or cluster state/info.

4. The method as claimed in claim 1, wherein the one or more alternate query suggestions are provided based on at least one of data scan scope for the parent query, data scan scope for alternative query, data schema, data statistics, computation statistics or cluster state/info.

5. The method as claimed in claim 1 further comprising:
receiving (414), by the query suggestion server (200), selection of one of the one or more alternate query suggestions from the users;
modifying, by the query suggestion server, the query based on the selection;
determining (416), in real time, by the query suggestion server (200), execution time for the modified query;
performing, by the query suggestion server (200), at least one of:
providing (426) one or more subsequent alternate query suggestions upon determining the execution time for the modified query exceeding the target time; or
providing the result of the modified query upon determining the execution time for the modified query within the target time.

6. The method as claimed in claim 5, wherein the target time is modifiable by the user.

7. The method as claimed in claim 5, wherein the subsequent alternate query suggestions are updated based on the selected alternate query suggestion.

8. The method as claimed in claim 5, wherein selection of the one or more alternate query suggestion comprises one of full and partial selection of the one or more alternate query suggestion.

9. The method as claimed in claim 5, wherein execution time of the one or more subsequent alternate query suggestion is within the target time.

10. A query suggestion server (200) for providing alternate query suggestions for time bound results, the server (200) comprising:
a receiving module for receiving a query comprising one or more dimensions and a target time for executing the query from a user device associated to a user;
**characterized in that**,
a query time estimation module for determining, in real time, execution time for the received query;
a query evaluation and alteration module (322) for executing the query and the query result is provided to the user if the execution time for the received query is less than the target time, or for identifying one or more alternate query suggestions if the execution time for the received query is more than the target time; and
an alternate query suggestion output module (326) for providing the one or more alternate query suggestions to the user device for modifying the query.

11. The server as claimed in claim 10, wherein execution time of the one or more alternate query suggestion is within the target time.

12. The server as claimed in claim 10, wherein the execution time is determined based on at least one of data scan scope for the query, data statistics, computation statistics or cluster state/info.

13. The server as claimed in claim 10, wherein the query evaluation and alteration module (322) identifies the one or more alternate query suggestions based on at least one of data scan scope for the parent query, data scan scope for alternative query, data schema, data statistics, computation statistics or cluster state/info.

14. The server as claimed in claim 10, wherein the query evaluation and alteration module (322) further comprises:
receiving selection of one of the one or more alternate query suggestions from the users;
modifying the query based on the selection;
determining, in real time, execution time for the modified query;
performing at least one of:
providing one or more subsequent alternate query suggestions upon determining the execution time for the modified query exceeding the target time; and
providing the result of the modified query within the target time upon determining the execution time for the modified query within the target time.

15. The server as claimed in claim 14, wherein the target time is modifiable by the user.

16. The server as claimed in claim 14, wherein the subsequent alternate query suggestions are updated based on the selected alternate query suggestion.

17. The server as claimed in claim 14, wherein selection of the one or more alternate query suggestion comprises one of full and partial selection of the one or more alternate query suggestion.

18. The server as claimed in claim 14, wherein execution time of the one or more subsequent alternate query suggestion is within the target time.

19. A non-transitory computer readable medium including operations stored thereon that when processed by at least one processing unit cause a query suggestion server to perform one or more actions by performing the acts of:
receiving a query comprising one or more dimensions and a target time for executing the query from a user device associated to a user;
**characterized in that**,
determining, in real time execution time for the received query;
if the execution time for the received query is less than the target time executing the query and the query result is provided to the user; or
if the execution time for the received query is more than the target time identifying one or more alternate query suggestions; and
providing the one or more alternate query suggestions to the user device for modifying the query.

20. A computer program for performing one or more actions on a query suggestion server, said computer program comprising code segment for receiving a query comprising one or more dimensions and a target time for executing the query from a user device associated to a user; **characterized in that**, code segment for determining, in real time execution time for the received query; code segment for executing the query and the query result is provided to the user if the execution time for the received query is less than the target time, or for identifying one or more alternate query suggestions if the execution time for the received query is more than the target time; and code segment for providing the one or more alternate query suggestions to the user device for modifying the query.

## Patentansprüche

1. Verfahren zur Bereitstellung alternativer Abfragevorschläge für zeitgebundene Ergebnisse, umfassend:
Empfangen (402), durch einen Abfragevorschlagsserver (200), einer Abfrage, die eine oder mehrere Dimensionen und eine Sollzeit zur Ausführung der Abfrage umfasst, von einer Benutzervorrichtung, die mit einem Benutzer in Verbindung steht;
wobei das Verfahren durch Folgendes gekennzeichnet ist:
Bestimmen (404) von Ausführungszeit für die empfangene Abfrage durch den Abfragevorschlagsserver (200) in Echtzeit;
wenn die Ausführungszeit für die empfangene Abfrage kürzer als die Sollzeit zur Ausführung (408) der Abfrage ist und das Abfrageergebnis dem Benutzer bereitgestellt ist, oder
wenn die Ausführungszeit für die empfangene Abfrage länger als die Sollzeit zur Identifizierung (410) eines oder mehrerer Abfragevorschläge durch den Abfragevorschlagsserver (200) ist; und
Bereitstellen (412), durch den Abfragevorschlagsserver (200), des einen oder der mehreren alternativen Abfragevorschläge an die Benutzervorrichtung zur Änderung der Abfrage.

2. Verfahren nach Anspruch 1, wobei Ausführungszeit des einen oder der mehreren alternativen Abfragevorschläge innerhalb der Sollzeit liegt.

3. Verfahren nach Anspruch 1, wobei die Ausführungszeit auf Grundlage von mindestens einem von Datenprüfumfang für die Abfrage, Datenstatistiken, Berechnungsstatistiken oder "Cluster"-Status/Info bestimmt wird.

4. Verfahren nach Anspruch 1, wobei der eine oder die mehreren alternativen Abfragevorschläge auf Grundlage von mindestens einem von Datenprüfumfang für die übergeordnete Abfrage, Datenprüfumfang für alternative Abfrage, Datenschema, Datenstatistiken, Berechnungsstatistiken oder "Cluster"-Status/Info bereitgestellt werden.

5. Verfahren nach Anspruch 1, ferner umfassend:
Empfangen (414), durch den Abfragevorschlagsserver (200), einer Auswahl von einem des einen oder der mehreren alternativen Abfragevorschläge von den Benutzern;
Ändern der Abfrage durch den Abfragevorschlagsserver auf Grundlage der Auswahl;
Bestimmen (416) von Ausführungszeit für die geänderte Abfrage durch den Abfragevorschlagsserver (200) in Echtzeit;
Durchführen, durch den Abfragevorschlagsserver (200) von mindestens einem von:
Bereitstellen (426) eines oder mehrerer nachfolgender alternativer Abfragevorschläge, wenn bestimmt wird, dass die Ausführungszeit für die geänderte Abfrage die Sollzeit überschreitet; oder
Bereitstellen des Ergebnisses der geänderten Abfrage, wenn bestimmt wird, dass die Ausführungszeit für die geänderte Abfrage innerhalb der Sollzeit liegt.

6. Verfahren nach Anspruch 5, wobei die Sollzeit durch den Benutzer änderbar ist.

7. Verfahren nach Anspruch 5, wobei die nachfolgenden alternativen Abfragevorschläge auf Grundlage des ausgewählten alternativen Abfragevorschlags aktualisiert werden.

8. Verfahren nach Anspruch 5, wobei die Auswahl des einen oder der mehreren alternativen Abfragevorschläge eins von vollständiger und teilweiser Auswahl des einen oder der mehreren alternativen Abfragevorschläge umfasst.

9. Verfahren nach Anspruch 5, wobei Ausführungszeit des einen oder der mehreren nachfolgenden alternativen Abfragevorschläge innerhalb der Sollzeit liegt.

10. Abfragevorschlagsserver (200) zur Bereitstellung alternativer Abfragevorschläge für zeitgebundene Ergebnisse, der Server (200) umfassend:
ein Empfangsmodul zum Empfangen einer Abfrage, die eine oder mehrere Dimensionen und eine Sollzeit zur Ausführung der Abfrage umfasst, von einer Benutzervorrichtung, die mit einem Benutzer in Verbindung steht;
**dadurch gekennzeichnet, dass**
ein Abfragezeit-Schätzungsmodul zum Bestimmen von Ausführungszeit für die empfangene Abfrage in Echtzeit;
ein Modul (322) zum Bewerten und Abändern von Abfragen zur Ausführung der Abfrage und das Abfrageergebnis dem Benutzer bereitgestellt wird, wenn die Ausführungszeit für die empfangene Abfrage kürzer als die Sollzeit ist, oder zur Identifizierung eines oder mehrerer alternativer Abfragevorschläge, wenn die Ausführungszeit für die empfangene Abfrage länger als die Sollzeit ist; und
ein Modul (326) zur Ausgabe alternativer Abfragevorschläge zur Bereitstellung des einen oder der mehreren alternativen Abfragevorschläge an die Benutzervorrichtung zur Änderung der Abfrage.

11. Server nach Anspruch 10, wobei Ausführungszeit des einen oder der mehreren alternativen Abfragevorschläge innerhalb der Sollzeit liegt.

12. Server nach Anspruch 10, wobei die Ausführungszeit auf Grundlage von mindestens einem von Datenprüfumfang für die Abfrage, Datenstatistiken, Berechnungsstatistiken oder "Cluster"-Status/Info bestimmt wird.

13. Server nach Anspruch 10, wobei das Modul (322) zum Bewerten und Abändern von Abfragen den einen oder die mehreren alternativen Abfragevorschläge auf Grundlage von mindestens einem von Datenprüfumfang für die übergeordnete Abfrage, Datenprüfumfang für alternative Abfrage, Datenschema, Datenstatistiken, Berechnungsstatistiken oder "Cluster"-Status/Info identifiziert.

14. Server nach Anspruch 10, wobei das Modul (322) zum Bewerten und Abändern von Abfragen ferner Folgendes umfasst:
Empfangen einer Auswahl eines des einen oder der mehreren alternativen Abfragevorschläge von den Benutzern;
Ändern der Abfrage auf Grundlage der Auswahl;
Bestimmen von Ausführungszeit für die geänderte Abfrage in Echtzeit;
Durchführen mindestens eines von:
Bereitstellen eines oder mehrerer nachfolgender alternativer Abfragevorschläge, wenn bestimmt wird, dass die Ausführungszeit für die geänderte Abfrage die Sollzeit überschreitet; und
Bereitstellen des Ergebnisses der geänderten Abfrage innerhalb der Sollzeit, wenn bestimmt wird, dass die Ausführungszeit für die geänderte Abfrage innerhalb der Sollzeit liegt.

15. Server nach Anspruch 14, wobei die Sollzeit durch den Benutzer änderbar ist.

16. Server nach Anspruch 14, wobei die nachfolgenden alternativen Abfragevorschläge auf Grundlage des ausgewählten alternativen Abfragevorschlags aktualisiert werden.

17. Server nach Anspruch 14, wobei die Auswahl des einen oder der mehreren alternativen Abfragevorschläge eins von vollständiger und teilweiser Auswahl des einen oder der mehreren alternativen Abfragevorschläge umfasst.

18. Server nach Anspruch 14, wobei Ausführungszeit des einen oder der mehreren nachfolgenden alternativen Abfragevorschläge innerhalb der Sollzeit liegt.

19. Nichtflüchtiger computerlesbarer Datenträger, der darauf gespeicherte Vorgänge enthält, die bei Verarbeitung durch mindestens eine Verarbeitungseinheit bewirken, dass ein Abfragevorschlagsserver eine oder mehrere Aktionen durchführt, indem er die folgenden Handlungen durchführt:
Empfangen einer Abfrage, die eine oder mehrere Dimensionen und eine Sollzeit zur Ausführung der Abfrage umfasst, von einer Benutzervorrichtung, die mit einem Benutzer in Verbindung steht;
**dadurch gekennzeichnet, dass**
Bestimmen von Ausführungszeit für die empfangene Abfrage in Echtzeit;
wenn die Ausführungszeit für die empfangene Abfrage kürzer als die Sollzeit zur Ausführung der Abfrage ist und das Abfrageergebnis dem Benutzer bereitgestellt ist; oder
wenn die Ausführungszeit für die empfangene Abfrage länger als die Sollzeit zur Identifizierung eines oder mehrerer alternativer Abfragevorschläge ist; und
Bereitstellen des einen oder der mehreren alternativen Abfragevorschläge an die Benutzervorrichtung zur Änderung der Abfrage.

20. Computerprogramm zur Durchführung einer oder mehrerer Aktionen auf einem Abfragevorschlagsserver, wobei das Computerprogramm Codesegment zum Empfangen einer Abfrage, die eine oder mehrere Dimensionen und eine Sollzeit zur Ausführung der Abfrage umfasst, von einer Benutzervorrichtung, die mit einem Benutzer in Verbindung steht, umfasst; **dadurch gekennzeichnet, dass** Codesegment zum Bestimmen von Ausführungszeit für die empfangene Abfrage in Echtzeit; Codesegment zur Ausführung der Abfrage und das Abfrageergebnis dem Benutzer bereitgestellt wird, wenn die Ausführungszeit für die empfangene Abfrage kürzer als die Sollzeit ist, oder zur Identifizierung eines oder mehrerer alternativer Abfragevorschläge, wenn die Ausführungszeit für die empfangene Abfrage länger als die Sollzeit ist; und Codesegment zur Bereitstellung des einen oder der mehreren alternativen Abfragevorschläge an die Benutzervorrichtung zur Änderung der Abfrage.

## Revendications

1. Procédé pour fournir des suggestions de requête alternative pour des résultats soumis à une limite de temps, consistant :
à recevoir (402), au moyen d'un serveur de suggestion de requête (200), une requête comprenant une ou plusieurs dimensions et un temps cible pour exécuter la requête en provenance d'un dispositif d'utilisateur associé à un utilisateur ;
le procédé étant **caractérisé en ce qu'**il consiste
à déterminer (404), en temps réel, au moyen du serveur de suggestion de requête (200), un temps d'exécution de la requête reçue ;
si le temps d'exécution de la requête reçue est inférieur au temps cible pour exécuter (408) la requête et le résultat de requête est fourni à l'utilisateur, ou
si le temps d'exécution de la requête reçue est supérieur au temps cible pour identifier (410), au moyen du serveur de suggestion de requête (200), une ou plusieurs suggestions de requête alternative ; et
à fournir (412), au moyen du serveur de suggestion de requête (200), la ou les suggestions de requête alternative au dispositif d'utilisateur pour modifier la requête.

2. Procédé selon la revendication 1, dans lequel le temps d'exécution de la ou des suggestions de requête alternative se situe pendant le temps cible.

3. Procédé selon la revendication 1, dans lequel le temps d'exécution est déterminé en se basant sur une portée de balayage de données pour la requête et/ou sur des statistiques de données et/ou sur des statistiques de calcul et/ou sur un état/des informations de grappe.

4. Procédé selon la revendication 1, dans lequel la ou les suggestions de requête alternative sont fournies en se basant sur une portée de balayage de données pour la requête parente et/ou sur une portée de balayage de données pour une requête alternative et/ou sur un schéma de données et/ou sur des statistiques de données et/ou sur des statistiques de calcul et/ou sur un état/des informations de grappe.

5. Procédé selon la revendication 1, consistant en outre :
à recevoir (414), au moyen du serveur de suggestion de requête (200), une sélection d'une suggestion de requête alternative parmi la ou les suggestions de requête alternative en provenance des utilisateurs ;
à modifier, au moyen du serveur de suggestion de requête, la requête en se basant sur la sélection ;
à déterminer (416), en temps réel, au moyen du serveur de suggestion de requête (200), un temps d'exécution de la requête modifiée ;
à réaliser, au moyen du serveur de suggestion de requête (200) :
la fourniture (426) de la ou des suggestions de requête alternative suite à la détermination que le temps d'exécution de la requête modifiée dépasse le temps cible ; et/ou
la fourniture du résultat de la requête modifiée suite à la détermination que le temps d'exécution de la requête modifiée se situe pendant le temps cible.

6. Procédé selon la revendication 5, dans lequel le temps cible peut être modifié par l'utilisateur.

7. Procédé selon la revendication 5, dans lequel les suggestions de requête alternative ultérieures sont mises à jour en se basant sur la suggestion de requête alternative sélectionnée.

8. Procédé selon la revendication 5, dans lequel la sélection de la ou des suggestions de requête alternative comprend soit une sélection partielle, soit une sélection complète de la ou des suggestions de requête alternative.

9. Procédé selon la revendication 5, dans lequel le temps d'exécution de la ou des suggestions de requête alternative ultérieures se situe pendant le temps cible.

10. Serveur de suggestion de requête (200) pour fournir des suggestions de requête alternative pour des résultats soumis à une limite de temps, le serveur (200) comprenant :
un module de réception pour recevoir une requête comprenant une ou plusieurs dimensions et un temps cible pour exécuter la requête en provenance d'un dispositif d'utilisateur associé à un utilisateur ;
**caractérisé en ce que**
un module d'estimation de temps de requête pour déterminer, en temps réel, un temps d'exécution de la requête reçue ;
un module d'évaluation et de modification de requête (322) pour exécuter la requête et le résultat de requête est fourni à l'utilisateur si le temps d'exécution de la requête reçue est inférieur au temps cible, ou pour identifier une ou plusieurs suggestions de requête alternative si le temps d'exécution de la requête reçue est supérieur au temps cible ; et
un module de sortie de suggestion de requête alternative (326) pour fournir la ou les suggestions de requête alternative au dispositif d'utilisateur pour modifier la requête.

11. Serveur selon la revendication 10, dans lequel le temps d'exécution de la ou des suggestions de requête alternative se situe pendant le temps cible.

12. Serveur selon la revendication 10, dans lequel le temps d'exécution est déterminé en se basant sur une portée de balayage de données pour la requête et/ou sur des statistiques de données et/ou sur des statistiques de calcul et/ou sur un état/des informations de grappe.

13. Serveur selon la revendication 10, dans lequel le module d'évaluation et de modification de requête (322) identifie la ou les suggestions de requête alternative en se basant sur une portée de balayage de données pour la requête parente et/ou sur une portée de balayage de données pour une requête alternative et/ou sur un schéma de données et/ou sur des statistiques de données et/ou sur des statistiques de calcul et/ou sur un état/des informations de grappe.

14. Serveur selon la revendication 10, dans lequel le module d'évaluation et de modification de requête (322) consiste en outre :
à recevoir une sélection d'une suggestion de requête alternative parmi la ou les suggestions de requête alternative en provenance des utilisateurs ;
à modifier la requête en se basant sur la sélection ;
à déterminer, en temps réel, un temps d'exécution de la requête modifiée ;
à réaliser :
la fourniture d'une ou de plusieurs suggestions de requête alternative ultérieures suite à la détermination que le temps d'exécution de la requête modifiée dépasse le temps cible ; et/ou
la fourniture du résultat de la requête modifiée pendant le temps cible suite à la détermination que le temps d'exécution de la requête modifiée se situe pendant le temps cible.

15. Serveur selon la revendication 14, dans lequel le temps cible peut être modifié par l'utilisateur.

16. Serveur selon la revendication 14, dans lequel les suggestions de requête alternative ultérieures sont mises à jour en se basant sur la suggestion de requête alternative sélectionnée.

17. Serveur selon la revendication 14, dans lequel la sélection de la ou des suggestions de requête alternative comprend soit une sélection partielle, soit une sélection complète de la ou des suggestions de requête alternative.

18. Serveur selon la revendication 14, dans lequel le temps d'exécution de la ou des suggestions de requête alternative ultérieures se situe pendant le temps cible.

19. Support non transitoire lisible par ordinateur sur lequel sont stockées des opérations qui, lorsqu'elles sont traitées par au moins une unité de traitement, contraignent un serveur de suggestion de requête à effectuer une ou plusieurs actions en réalisant les mesures consistant :
à recevoir une requête comprenant une ou plusieurs dimensions et un temps cible pour exécuter la requête en provenance d'un dispositif d'utilisateur associé à un utilisateur ;
**caractérisé en ce qu'**il consiste
à déterminer, en temps réel, un temps d'exécution de la requête reçue ;
si le temps d'exécution de la requête reçue est inférieur au temps cible pour exécuter la requête et le résultat de requête est fourni à l'utilisateur ; ou
si le temps d'exécution de la requête reçue est supérieur au temps cible pour identifier une ou plusieurs suggestions de requête alternative ; et
à fournir la ou les suggestions de requête alternative au dispositif d'utilisateur pour modifier la requête.

20. Programme d'ordinateur pour effectuer une ou plusieurs actions sur un serveur de suggestion de requête, ledit programme d'ordinateur comprenant un segment de code pour recevoir une requête comprenant une ou plusieurs dimensions et un temps cible pour exécuter la requête en provenance d'un dispositif d'utilisateur associé à un utilisateur ; **caractérisé en ce qu'**un segment de code destiné à déterminer, en temps réel, un temps d'exécution de la requête reçue ; un segment de code destiné à exécuter la requête et le résultat de requête est fourni à l'utilisateur si le temps d'exécution de la requête reçue est inférieur au temps cible, ou à identifier une ou plusieurs suggestions de requête alternative si le temps d'exécution de la requête reçue est supérieur au temps cible ; et un segment de code destiné à fournir la ou les suggestions de requête alternative au dispositif d'utilisateur pour modifier la requête.
